# FASCICULE DE BREVET EUROPEEN

(11) **EP 3 034 376 B1**
(45) Date de publication et mention de la délivrance du brevet: **18.04.2018**
(21) Numéro de dépôt: 15197382.3
(22) Date de dépôt: 01.12.2015
(51) Int. Cl.: B62B 1/20, B65D 85/68

(54) **ENSEMBLE DE TRANSPORT DE BROUETTES DÉMONTABLES**
TRANSPORTANORDNUNG FÜR ZERLEGBARE SCHUBKARREN
ASSEMBLY FOR TRANSPORTING COLLAPSIBLE WHEELBARROWS

(30) Priorité: 16.12.2014 FR 1462514
(43) Date de publication de la demande: 22.06.2016
(73) Titulaire: CDH Group, 27610 Romilly sur Andelle (FR)
(72) Inventeur: BERGAGNINI, Sylvain, 27610 ROMILLY SUR ANDELLE (FR)
(74) Mandataire: Demulsant, Xavier

(56) Documents cités:
- FR-A1- 2 750 953
- FR-A5- 2 076 549
- US-A- 1 630 975
- US-A- 3 580 467
- US-A- 4 991 716
- US-A1- 2007 007 738
- US-B1- 7 104 565

## Description

L'invention se rapporte au domaine technique des brouettes, et plus particulièrement à la logistique de tels véhicules à brancards.

Les brouettes sont conventionnellement livrées empilées sur palettes.

Afin de faciliter la logistique, le document FR 2717761 propose une brouette empilable par sous éléments prémontés, la brouette comprenant deux ensembles : un premier ensemble formé par la caisse et les brancards, et un deuxième ensemble formé par les pieds et paliers de roues, ces deux ensembles étant reliés entre eux de manière démontable par une roue munie d'un axe démontable. Les brancards sont réalisés par un tube d'un seul tenant. Les pieds sont également formés par un tube d'un seul tenant plié. Pour la livraison, le deuxième ensemble est positionné dans la caisse et la roue est placée entre les brancards. Cette disposition permet un gerbage pour le stockage, la caisse et les brancards d'une brouette étant placés au dessus de la caisse et des brancards d'une brouette inférieure.

Le document FR 2767106 propose une brouette du même type général que décrit dans le document FR 2717761, l'assemblage du premier et du deuxième ensemble pouvant être effectué sans l'aide d'outils, par clipsage.

Les documents FR 2915448, FR 2405877, GB654802, FR2523058, FR2326834, EP 826605 décrivent également des brouettes livrées empilées les unes sur les autres.

Le stockage et la manutention de brouettes empilées, montées ou non, génèrent des frais importants et le gerbage et la palettisation sont difficiles à réaliser.

En alternative, dans l'art antérieur, des brouettes démontées emballées à l'unité ont été proposées. On peut se référer, par exemple, aux documents US 20080041740, FR 2511978, FR 2486893, FR 2543531, FR 2076549, US 1630975, US 7104565, US 2007007738, FR 2523059 et GB 2496629. Document US4991716A décrit un ensemble avec toutes les caractéristiques de la préambule de la revendication 1. Dans ces réalisations antérieures, les pièces de la brouette sont soient placées en vrac dans la cuve, soit placées à côté de la cuve, dans l'emballage, ce qui n'est pas sans inconvénients. Lorsque les pièces de la brouettes sont placées en vrac dans la cuve, il existe un risque majeur de dégradation de ces pièces et de la cuve lors de la manutention. Lorsque les pièces de la brouette sont placées hors de la cuve, l'emballage présente un encombrement important.

Un premier objet de l'invention est de proposer une logistique pour brouettes démontables, permettant de mettre à disposition une large gamme de brouettes, avantageusement à l'unité, à une diversité de clients finaux.

Un deuxième objet de l'invention est de proposer une telle logistique qui assure une qualité de service élevée, en particulier une grande qualité perçue par les clients finaux.

Un troisième objet de l'invention est de proposer une telle logistique qui assure une sécurité lors du transport, et en particulier en cas de gerbage et de palettisation.

Un quatrième objet de l'invention est de proposer une telle logistique qui facilite, pour le premier utilisateur d'une brouette démontable, un montage intuitif, sans recours important au raisonnement ou à une expérience antérieure.

A ces fins, il est proposé, selon un premier objet, un ensemble comprenant :
- une brouette en pièces détachées, incluant :
   - une cuve ;
   - un châssis apte à recevoir la cuve ;
   - deux brancards aptes à venir se fixer sur le châssis pour former des moyens de préhension et de manoeuvre de la brouette, et
   - une roue apte à être montée en rotation sur le châssis ;
- un carton de transport apte à accueillir la cuve de la brouette, et
- une boîte de maintien de forme sensiblement complémentaire à la cuve, cette boîte de maintien venant se loger dans la cuve et étant apte à accueillir le châssis, les brancards et la roue de la brouette.

Selon diverses réalisations, l'ensemble présente les caractères suivants, le cas échéant combinés :
- la boîte de maintien comprend un fond, une première paroi, une deuxième paroi, une troisième paroi et une quatrième paroi, ces quatre parois formant une ceinture encerclant le fond ;
- la première paroi comprend une surface pleine, apte à recevoir, en appui, une première extrémité du châssis de la brouette ;
- la deuxième paroi, opposée à la première, comprend des ouvertures aptes à recevoir, au moins partiellement, une deuxième extrémité du châssis de la brouette, opposée à la première extrémité ;

- la première paroi comprend des lumières aptes à recevoir, au moins partiellement, une première extrémité de chacun des brancards de la brouette ;
- la troisième paroi et la quatrième paroi sont pourvues chacune de trois fentes pratiquées sur un bord supérieur écarté du fond de la boîte de maintien, ces fentes étant aptes à recevoir les deux brancards ;
- les fentes sont pourvues d'un vantail pliable vers l'intérieur du carton pour servir de support pour les brancards ;
- chaque fente est pourvue de battants s'étendant sur une hauteur inférieur à la hauteur de la fente de sorte à définir un logement dans lequel est reçu le brancard, les battants permettant, en outre, de maintenir le brancard dans la fente ;
- chaque fente présente une hauteur propre, indépendante de la hauteur des autres fentes.

Il est proposé, selon un deuxième aspect, un procédé d'assemblage de l'ensemble tel que présenté ci-dessus, ce procédé comprenant les étapes consistant à :
- mettre en volume le carton de transport ;
- mettre en volume la boîte de maintien ;
- placer la cuve de la brouette dans le carton de transport ;
- placer la boîte de maintien dans la cuve ;
- placer le châssis de la brouette dans la boîte de maintien ;
- placer la roue sur le châssis de la brouette ;
- placer un premier brancard au dessus la roue, et
- placer le deuxième brancard sur le premier brancard.

D'autres objets et avantages de l'invention apparaîtront au cours de la description suivante de modes de réalisation, description qui va être effectuée à la lumière des dessins annexés dans lesquels :
- les figures 1 et 2 représentent en perspective, suivant deux angles de vue, les éléments d'une brouette démontable ;
- les figures 3 et 4 représentent en perspective, suivant deux angles de vue, une brouette obtenue par assemblage des éléments représentés en figures 1 et 2 ;
- la figure 5 est une vue en plan d'un flan pour former une boîte de maintien ;
- la figure 6 est une vue en perspective d'une boîte de maintien issue de la mise en volume du flan représenté en figure 5, le volet de séparation des brancards étant représenté avant mise en place des brancards ;
- la figure 7 est une vue en perspective de la boîte de maintien de la figure 6, selon un autre angle de vue, le volet de séparation des brancards étant représenté dans sa position d'utilisation, entre les brancards, les brancards n'étant pas représentés sur cette figure, afin de simplification ;

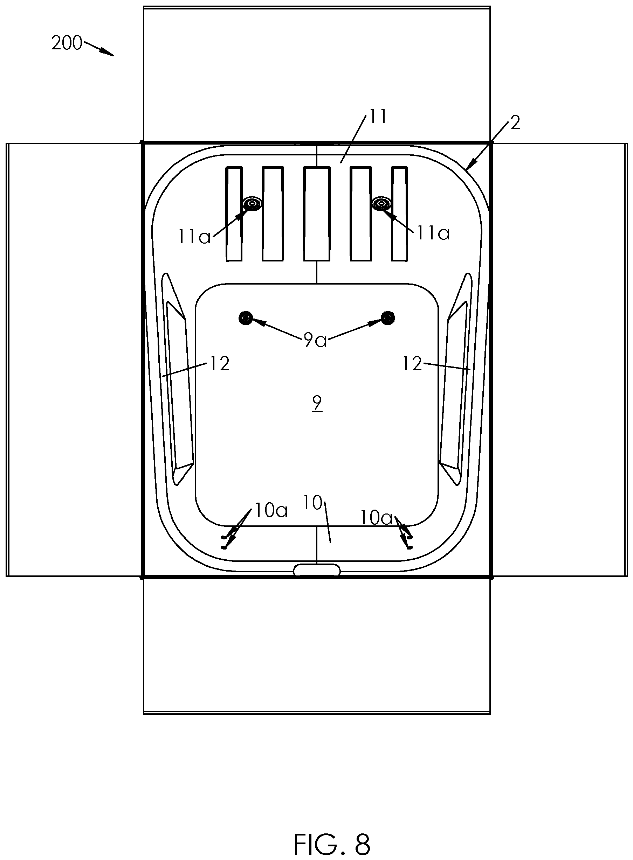

- la figure 8 est une vue de dessus d'une cuve de brouette placée dans un carton d'expédition ;
- la figure 9 est une vue de dessus illustrant la mise en place de la boîte de maintien représentée en figure 6, dans la cuve de brouette représentée en figure 8 ;
- les figures 10 à 14 sont des vues de dessus de différentes étapes de mise en place des éléments de la brouette démontable représentée en figures 1 à 4, dans la boîte de maintien représentée en figure 9 ;

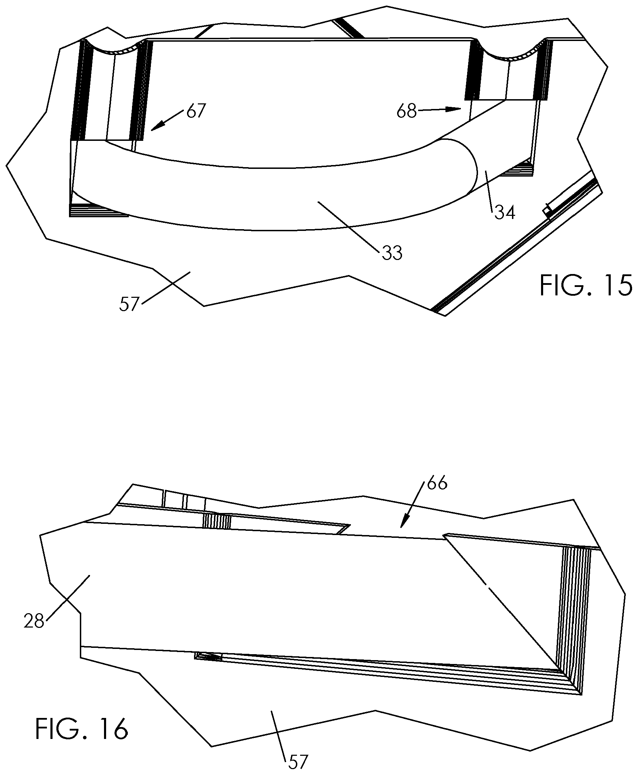

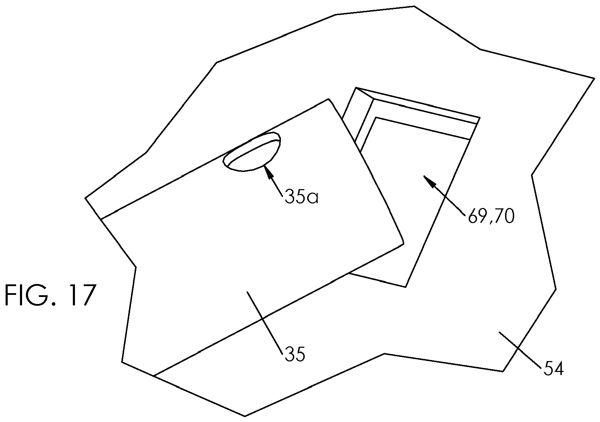

- les figures 15 à 17 sont des vues de détail des moyens de calage des brancards de la brouette démontable.

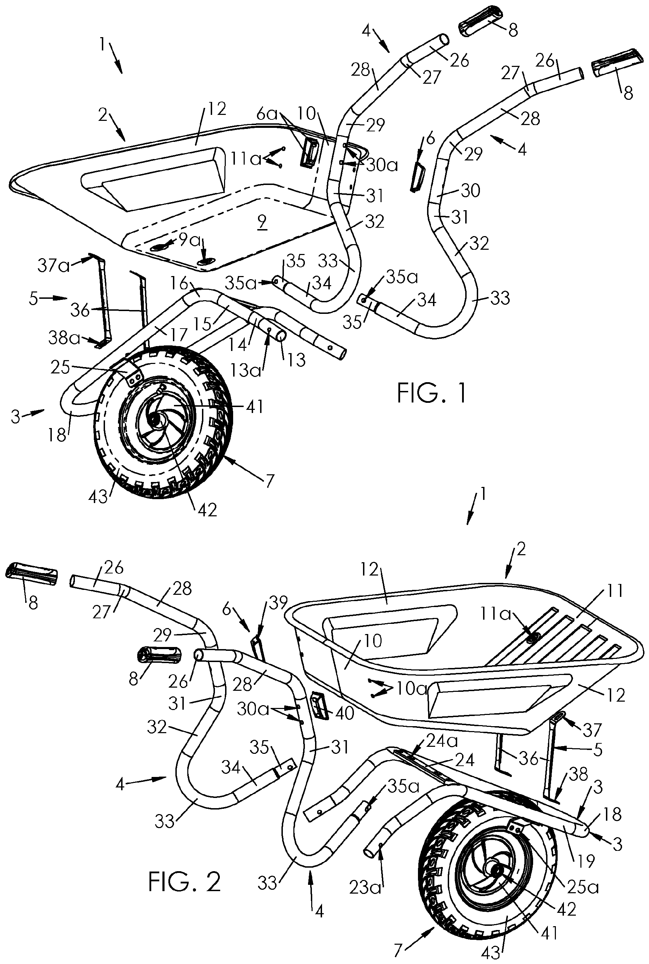

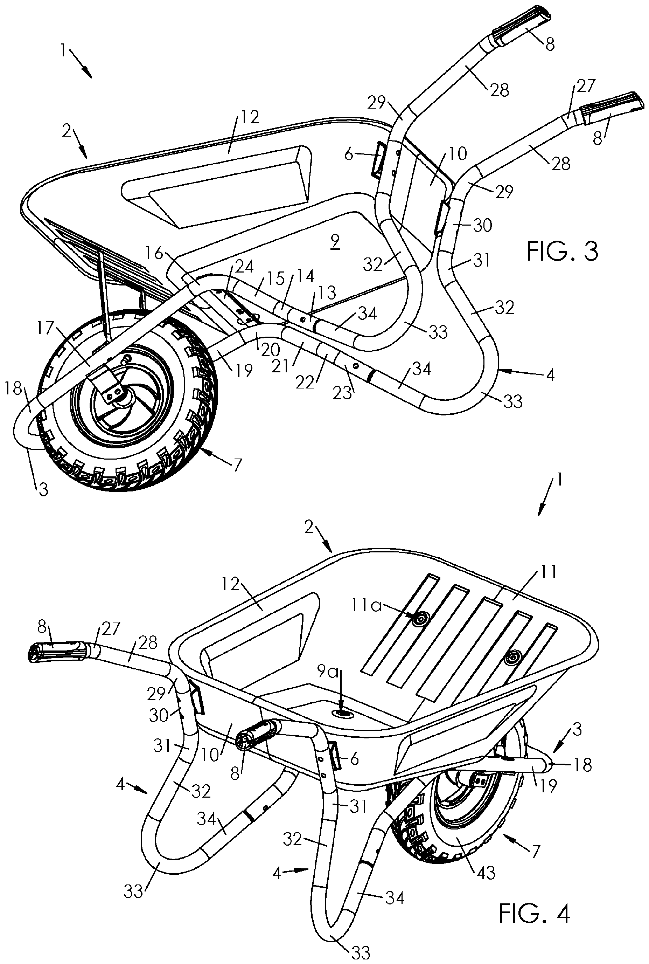

Les figures 1 et 2 représentent une brouette **1** en configuration éclatée selon deux orientations différentes. Les figures 3 et 4 représentent la brouette **1** dans une configuration assemblée selon les mêmes orientations que les figures 1 et 2.

La brouette **1** comprend une cuve **2**, un châssis comprenant un butoir **3** et deux brancards **4**, deux supports de caisse **5** permettant la reprise d'efforts de la cuve **2** sur le butoir **3,** deux tampons **6** permettant de faire l'interface entre la cuve **2** et les brancards **4,** une roue **7** et deux poignées **8** aptes à venir coopérer avec les brancards **4** pour faciliter la préhension et la manoeuvre de la brouette **1** pour un utilisateur.

Les éléments de la brouette **1** sont pourvus de perçages qui permettent l'assemblage de la brouette **1.** Afin de faciliter la compréhension de la description, les perçages des différents éléments seront référencés Xa, où « X » est la référence de l'élément portant le perçage et « a » est l'indice définissant qu'il s'agit d'un perçage.

La cuve **2** présente un fond **9**, une bordure **10** arrière, une bordure **11** avant et deux bordures **12** latérales reliant chacune la bordure **10** arrière à la bordure **11** avant. Les bordures **10**, **11**, **12** forment une ceinture qui fait saillie du fond **9** et sont inclinées par rapport au fond **9** de sorte que la cuve **2** a une forme évasée depuis le fond **9.**

Comme on le voit sur les figures le rebord d'extrémité des bordures **10, 11, 12,** opposé au fond **9,** est replié afin d'éviter toute blessure de l'utilisateur lors de la manipulation de la cuve **2.**

En outre, la bordure **11** avant, la bordure **10** arrière et le fond **9** de la cuve **2** sont pourvus de perçages **11a**, **10a, 9a** pour permettre l'assemblage de la brouette **1** comme il sera expliqué ci-après.

Avantageusement, les bordures **10, 11, 12** peuvent présenter des emboutis à des fins de rigidification ou simplement d'esthétisme.

Le butoir **3** est un tube cintré en forme générale de V ayant une base et deux bras dont les extrémités sont repliées.

Le butoir **3** comprend successivement une première portion **13,** un premier pli **14,** une deuxième portion **15,** un deuxième pli **16,** une troisième portion **17,** un troisième pli **18,** une quatrième portion **19,** un quatrième pli **20,** une cinquième portion **21,** un cinquième pli **22** et une sixième portion **23.**

Selon le mode de réalisation représenté sur les figures, le troisième pli **18** forme la base du V et la première portion **13,** la deuxième portion **15,** la troisième portion **17,** le premier pli **14** et le deuxième pli **16,** d'une part, et la quatrième portion **19**, la cinquième portion **21,** la sixième portion **23,** le quatrième pli **20** et le cinquième pli **22,** d'autre part, forment respectivement le premier bras et le deuxième bras du V.

Avantageusement, la troisième portion **17** et la quatrième portion **19** s'étendent dans un même plan différent d'un plan dans lequel s'étendent la première portion **13**, la deuxième portion **15**, la cinquième portion **21** et la sixième portion **23**, le deuxième pli **16** et le quatrième pli **20** formant le décalage angulaire entre ces deux extensions.

En outre, la première portion **13** et la deuxième portion **15** sont angulairement décalées par le premier pli 14, de même que la sixième portion **23** et la cinquième portion **21** sont angulairement décalées par le cinquième pli **22**.

La première portion **13** et la sixième portion **23** sont pourvues de perçages **13a**, **23a** pour permettre l'assemblage des brancards **4** comme nous le verrons ci-après.

De même, la troisième portion **17** et la quatrième portion **19** sont également pourvues de perçages **17a**, **19a** pour permettre la solidarisation du butoir **3** et des supports **5** de caisse.

Le butoir **3** comprend également une traverse **24** pourvue de perçages **24a**, reliant le deuxième pli **16** et le quatrième pli **20**, et deux pattes **25** également pourvues de perçages **25a**, la première patte **25** étant solidaire de la troisième portion **17**, la deuxième patte **25** étant solidaire de la quatrième portion **19**.

Les brancards **4** sont des tubes cintrés ayant une forme générale de S. Les deux brancards **4** sont identiques, aussi nous ne décriront qu'un seul brancard **4.**

Le brancard **4** comprend successivement une première section **26**, un premier coude **27**, une deuxième section **28**, un deuxième coude **29**, une troisième section **30,** un troisième coude **31**, une quatrième section **32**, un quatrième coude **33**, une cinquième section **34** et, enfin, une restriction **35**, la restriction **35** ayant un diamètre inférieur au diamètre du reste du brancard **4.**

De préférence, les tubes utilisés pour former le butoir **3** et les brancards **4** sont identiques et le diamètre externe de la restriction **35** est égal à un diamètre interne du reste du tube du brancard **4** de sorte à permettre l'emboitement de la restriction **35** des brancards **4** dans la première portion **13** et la sixième portion **23** du butoir **3.**

Avantageusement, le premier coude **27,** le deuxième coude **29** et le troisième coude **31** s'ouvrent dans une direction sensiblement similaire de sorte à former une première courbe du S, le quatrième coude **33** s'ouvrant dans une direction opposée de sorte à former l'autre courbe du S.

Comme on le voit sur les figures 1 et 2, la restriction **35** comporte des perçages **35a** aptes à venir en regard des perçages **13a, 23a** de la première portion **13** et de la sixième portion **23** du butoir **3** pour permettre l'assemblage des brancards **4** avec le butoir **3,** et la troisième section **30** comporte des perçages **30**a pour permettre la solidarisation de la cuve **2** avec les brancards **4.**

Comme les brancards **4,** les supports **5** de caisse sont identiques, aussi nous ne décrirons qu'un seul support **5** de caisse.

Le support **5** de caisse est une pièce métallique sensiblement en forme de U ayant un corps **36** et deux extrémités **37, 38,** à savoir une première extrémité **37** et une deuxième extrémité **38,** pliées par rapport au corps **36,** les extrémités **37, 38** allant en s'évasant par rapport au corps **36.**

Le corps **36** a une forme générale de gouttière c'est-à-dire qu'il est arrondi, et les extrémités **37, 38** sont sensiblement planes et comprennent chacune un perçage **37a, 38a.**

Les tampons **6** sont également identiques, nous ne décrirons donc qu'un seul tampon **6.**

Le tampon **6** comprend une base **39** de forme complémentaire à la partie de la cuve **2** contre laquelle le tampon **6** est au contact, c'est-à-dire une base **39** sensiblement plane si le tampon **6** est au contact d'une surface plane de la cuve **2** ou une base **39** concave si le tampon **6** est au contact d'une surface convexe de la cuve **2.**

A l'opposé de la base **39,** le tampon **6** comprend une face **40** concave apte à recevoir une section d'un brancard **4,** dans l'exemple illustré, la troisième section **30.**

Enfin, le tampon **6** comprend deux perçages **6a** traversant depuis la face concave **40.**

La roue **7** comprend une jante **41,** un moyeu **42** qui est traversé par un axe (non représenté) pour permettre la rotation de la roue **7,** et un pneu **43** monté sur la jante **41.**

Avantageusement, la roue **7** est de type à chambre à air et comprend une valve faisant saillie de la jante **41.** La présence de la chambre à air permet d'ajuster la pression dans la roue **7** pour permettre d'augmenter la surface de liaison entre la roue **7** et le sol et ainsi permettre une meilleure répartition de la charge de la brouette **1** sur le sol ou, au contraire, diminuer la surface de contact entre la roue **7** et le sol et rendre la brouette **1** facilement manoeuvrable pour l'utilisateur.

Selon une variante de réalisation non représentée sur les figures, la roue **7** est pleine, c'est-à-dire que le pneu est réalisé dans une bande en élastomère.

Enfin, les poignées **8** sont sous la forme de manchons borgnes et présentent une alternance de creux et de bosses pour permettre la préhension et le maintien de la brouette **1** par un utilisateur.

Avantageusement, les poignées **8** ont un diamètre interne légèrement inférieur au diamètre externe des tubes des brancards **4** de sorte à assurer un bon maintien des poignées **8** sur les brancards **4.**

L'assemblage de la brouette **1** par un utilisateur se fait au moyen de vis et d'écrous non représentés, selon les étapes suivantes.

Lors d'une première étape, l'utilisateur forme le châssis en assemblant les brancards **4** sur le butoir **3.** Pour cela, l'utilisateur insère la restriction **35** de chaque brancard **4** dans la première portion **13** ou la sixième portion **23** du butoir **3** de sorte que les perçages **35a** des restrictions **35** soient en regard des perçages **13a, 23a** de la première portion **13** et de la sixième portion **23.**

Dans une deuxième étape, l'utilisateur monte la roue **7** sur le châssis. Pour cela, l'utilisateur positionne le moyeu de la roue **7** en regard des perçages **25a** des pattes **25** du butoir **3,** insère l'axe (non représenté) de sorte que l'axe traverse la roue **7** et les pattes **25,** puis solidarise l'ensemble au moyen d'écrous.

Lorsque la roue **7** est montée, la partie assemblée de la brouette **1,** c'est-à-dire le châssis et la roue **7,** est stable et repose sur trois points, à savoir le quatrième coude **33** des brancards **4** et la roue **7.**

Dans une troisième étape, l'utilisateur positionne et solidarise la cuve **2** sur le châssis. Pour cela, l'utilisateur place les perçages **9a** du fond **9** au droit des perçages **24a** de la traverse **24** du butoir **3,** puis positionne les tampons **6** de sorte que :
- les perçages **6**a des tampons **6** soient en regard des perçages **30a** de la troisième section **30** des brancards **4,** d'une part, et des perçages **10**a de la bordure **10** arrière de la cuve **2** d'autre part ;
- la base **39** des tampons **6** soit au contact de la bordure **10** arrière de la cuve **2,** et que
- la face **40** concave des tampons **6** soit au contact de la troisième section **30** d'un brancard **4.**

Une fois la cuve **2** positionnée, l'utilisateur peut alors solidariser la cuve **2** au châssis au moyen de vis et d'écrous.

Dans une quatrième étape, l'utilisateur positionne les supports **5** de caisse de sorte que le perçage **37a** de la première extrémité **37** des supports **5** de caisse soit en regard d'un perçage **11**a de la bordure **11** avant de la cuve **2,** et que le perçage **38a** de la deuxième extrémité **38** des supports **5** de caisse soit en regard d'un perçage **17a, 19a** de la troisième portion **17** ou de la quatrième portion **19** du butoir **3.**

Lorsque les supports **5** de caisse sont correctement positionnés, l'utilisateur peut alors solidariser les supports **5** de caisse au butoir **3** et à la cuve **2** au moyen de vis et d'écrous.

L'utilisateur peut ensuite terminer l'assemblage de la brouette **1** lors d'une cinquième étape dans laquelle les poignées **8** sont solidarisées aux brancards **4.**

Pour cela, l'utilisateur place les poignées **8** pendant quelques minutes dans une eau chaude comprise entre 75°C et 85°C, et de préférence de 80°C, afin de dilater et d'assouplir les poignées **8** pour les rendre malléables.

Lorsque les poignées **8** sont correctement malléables, l'utilisateur peut emmancher les poignées **8** sur la première section **26** de chacun des brancards **4.**

Après refroidissement, les poignées **8** recouvrent leurs dimensions initiales et sont solidarisées aux brancards **4.**

Selon une variante non représentée sur les dessins, les poignées **8** sont emmanchées lors de la fabrication sur les brancards **4.**

Dans la suite de cette description, l'expression « ligne d'articulation » sera employée pour désigner une ou plusieurs lignes de rainage, rainurage, une ou plusieurs lignes d'affaiblissement, par exemple par réalisation d'encoches ou de perforation, permettant le pivotement des éléments du flan **49** les uns par rapport aux autres.

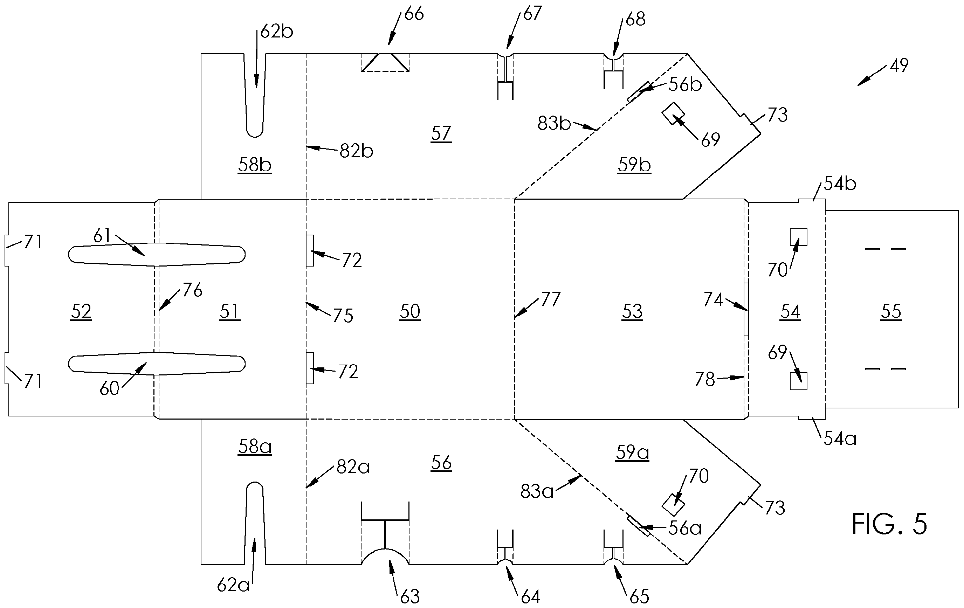

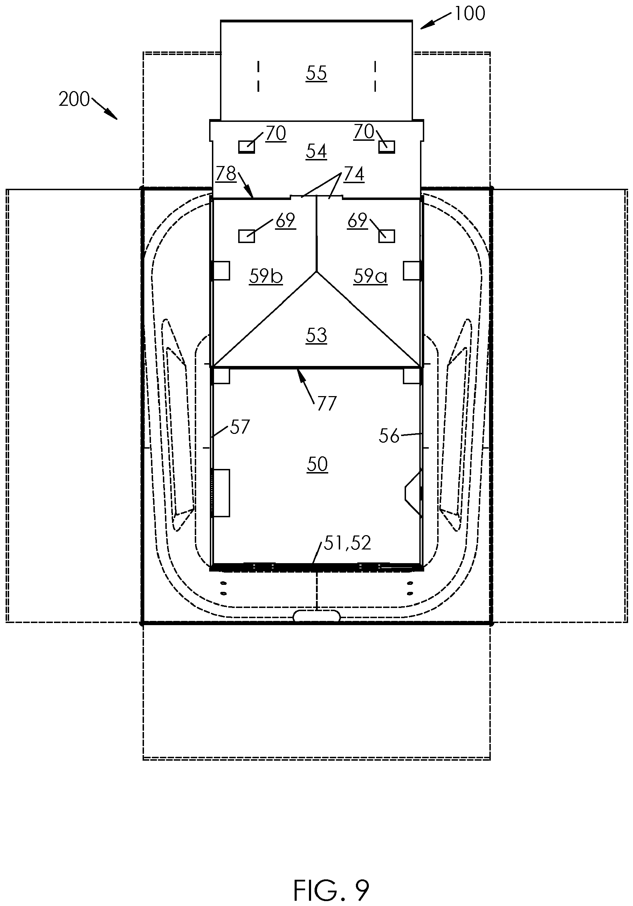

Dans la suite de cette description, les termes « droite », « gauche », « dessus », « dessous » seront employés en référence aux figures 9 à 14, et les termes « transversal », «longitudinal » seront employés en référence à la disposition du flan **49** vu à plat en figure 5.

Le flan de maintien **49** présente une symétrie par rapport à un plan longitudinal, à l'exception de la structure de détail des ouvertures de passage des brancards.

Le flan de maintien **49** comporte une paroi de fond **50,** les autres éléments du flan **49** étant articulés, directement ou indirectement, à cette paroi de fond **50.**

Ainsi qu'il apparaît en figure 9, lorsque le flan de maintien **49** est mis en volume, la paroi de fond **50** est en appui contre le fond **9** de la cuve **2.** Avantageusement, la paroi de fond **50** est de dimensions inférieures ou sensiblement égales aux dimensions du fond **9** de la cuve **2,** permettant un appui sur l'ensemble du fond **9** de la cuve **2.**

La paroi de fond **50** est destinée à former le fond d'une boîte de maintien **100** de l'ensemble des pièces d'une brouette démontable telle que représentée en figures 1 à 4, la boîte de maintien **100** logeant l'ensemble des pièces de la brouette **1.** La boîte de maintien **100** est placée dans la cuve **2** et l'ensemble cuve **2**/boîte de maintien **100** est logé dans un carton de transport **200.**

Dans le mode de réalisation représenté, la boîte de maintien **100** comprend un fond, formé par la paroi de fond **50,** et une paroi latérale formant une ceinture sensiblement perpendiculaire à la paroi de fond **50,** et ne comporte pas de couvercle. Dans d'autres modes de réalisation, non représentés, la boîte de maintien **100** comporte un couvercle, articulé ou rapporté.

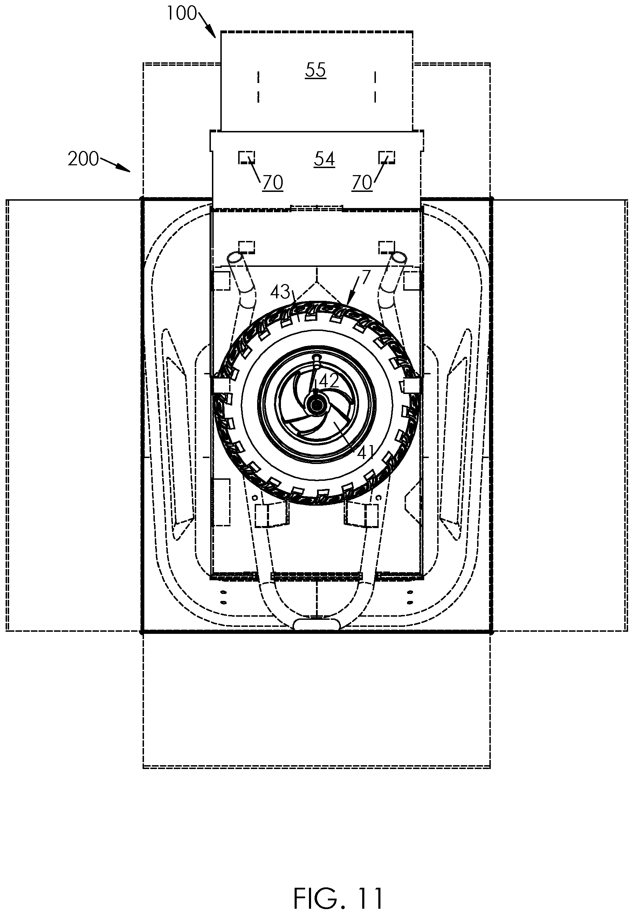

Ainsi qu'il apparaît en figure 11, la largeur de la paroi de fond **50** est avantageusement sensiblement égale à la largeur de la roue **7,** cette disposition participant à la stabilité de la position de la roue 7 dans la boîte de maintien **100.**

Le flan **49** de maintien comprend, suivant sa direction d'élancement longitudinale principale, un premier volet arrière **51** et un second volet arrière **52,** un premier volet avant **53,** un deuxième volet avant **54,** et un volet de séparation **55.**

Le premier volet arrière **51** et le premier volet avant **53** sont articulés transversalement à la paroi de fond **50** et sont de même largeur que cette paroi de fond **50.**

Le deuxième volet arrière **52** est articulé transversalement au premier volet arrière **51** et est destiné à être replié à 180° en regard du premier volet arrière **51,** vers l'intérieur de la boîte de maintien **100,** lors de la mise en volume du flanc **49.**

Le deuxième volet avant **54** est articulé transversalement au premier volet avant **53** et est destiné à être replié à 180° en regard du premier volet avant **53,** vers l'intérieur de la boîte de maintien **100,** lors de la mise en volume du flanc **49.**

Le flan **49** comprend deux volets latéraux **56, 57** de forme trapézoïdal, articulés longitudinalement à la paroi de fond **50** sur toute la longueur de la paroi de fond **50.** La longueur des volets latéraux **56, 57** va en augmentant depuis leur ligne d'articulation à la paroi de fond **50** jusqu'à leur bord libre.

Le volet latéral **56** droit est articulé transversalement à une patte arrière **58a** et est articulé à une patte avant **59a.** De même, le volet latéral **57** gauche est articulé transversalement à une patte arrière **58b** et à une patte avant **59b.**

Le flan **49** comporte des moyens de passage, appui et calage des éléments de la brouette **1,** et plus précisément du butoir **3** et des brancards **4.**

Pour la réception et le calage du butoir **3,** deux lumières oblongues **60,61** s'étendent longitudinalement de part et d'autre de la ligne d'articulation transversale du premier volet arrière **51** au deuxième volet arrière **52.**

A ces deux lumières oblongues **60,61** correspondent deux découpes **62a, 62b** transversales disposées respectivement :
- sur la patte avant **58**a articulée au volet latéral droit **56** ;
- et sur la patte avant **58b** articulée au volet latéral gauche **57.**

Lors de la mise en volume du flan **49,** les pattes **58a, 58b** viennent se placer entre le premier volet arrière **51** et le deuxième volet arrière **52,** et les découpes **62a, 62b** viennent en regard des lumières oblongues **60, 61,** la triple épaisseur de matière formant le flan **49** assurant une résistance mécanique importante pour le calage du butoir 3 dans la boîte de maintien **100.**

Le volet latéral droit **56** comprend des moyens de positionnement, de passage et calage **63, 64, 65** d'un premier brancard, ces moyens **63, 64, 65** s'étendant à partir du bord libre longitudinal de ce volet latéral droit **56.**

De même, le volet latéral gauche **57** comprend des moyens de positionnement, de passage et calage **66, 67, 68** du second brancard, ces moyens **66, 67, 68** s'étendant à partir du bord libre longitudinal de ce volet latéral gauche.

Ainsi qu'il apparaîtra plus complètement dans la suite de cette description, les moyens de positionnement, passage et calage **63-65** disposés sur le volet latéral droit **56** sont de conception semblables mais de dimensions différentes de celles des moyens de positionnement, passage et calage **66-68** disposés sur le volet latéral gauche **57.** Ces différences de dimensions mises à part, le flan **49** présente une symétrie par rapport à un plan longitudinal.

Le deuxième volet avant **54** comporte deux découpes **69** venant en regard de deux découpes **70** semblables ménagées respectivement :
- sur la patte avant **59a** articulée au volet latéral droit **56** ;
- sur la patte avant **59b** articulée au volet latéral gauche **57.**

Pour la stabilité de la boîte de maintien **100,** après mise en volume du flan **49,** différents moyens peuvent être mis en oeuvre, tels qu'agrafage, ou collage. Avantageusement, tel que représenté, ce maintien en volume est assuré, sans utilisation de matière supplémentaire à celle du flan **49,** au moyen de trois séries de languettes et encoches.

Pour la première série de languettes et encoches, le deuxième volet arrière **52** comprend, sur son bord libre transversal, deux languettes **71** venant se loger, lors de la mise en volume du flan **49,** dans deux encoches **72** ménagées sur la paroi de fond **50,** à proximité de la ligne d'articulation avec le premier volet arrière **51.**

Pour la deuxième série de languettes et encoches, les pattes avant **59a, 59b** sont chacune pourvues, sur leur bord libre, d'une languette **73** venant se loger, lors de la mise en volume du flan **49,** dans une encoche **74** ménagée sur la ligne d'articulation entre le premier volet avant **53** et le deuxième volet avant **54.**

Pour la troisième série de languettes et encoches, le deuxième volet avant **54** est pourvu d'une languette **54a, 54b** sur chacun de ses deux bords latéraux, ces deux languettes **54a, 54b** venant se loger respectivement dans une encoche **56a, 56b** ménagée dans le volet latéral droit **56** et le volet latéral gauche **57,** à proximité de la ligne d'articulation avec la patte avant **59a, 59b.**

L'on décrit maintenant la mise en volume du flan **49,** selon une mise en oeuvre.

L'ensemble formé par le premier volet arrière **51,** le deuxième volet arrière **52** et les pattes arrières **58a, 58b** est plié autour des lignes d'articulations **75, 76, 82a, 82b** de sorte à ce que les pattes arrières **58a, 58b** soient placées entre le premier volet arrière **51** et le second volet arrière **52,** les lumières **62a, 62b** venant en regard des lumières oblongues **60,61.**

Dans le même temps, les volets latéraux **56, 57** sont pliés à 90° par rapport à la paroi de fond **50** et les pattes avant **59a, 59b** sont pliées à 90° par rapport aux volets latéraux **56, 57,** autour de lignes **83a, 83b** d'articulation, puis placées au dessus du premier volet avant **53,** le deuxième volet avant **54** étant ensuite replié à 180° et placé en regard des pattes **59a, 59b,** vers l'intérieur de la boîte de maintien **100.** Dans cette disposition, les découpes **69, 70** sont en regard les unes des autres.

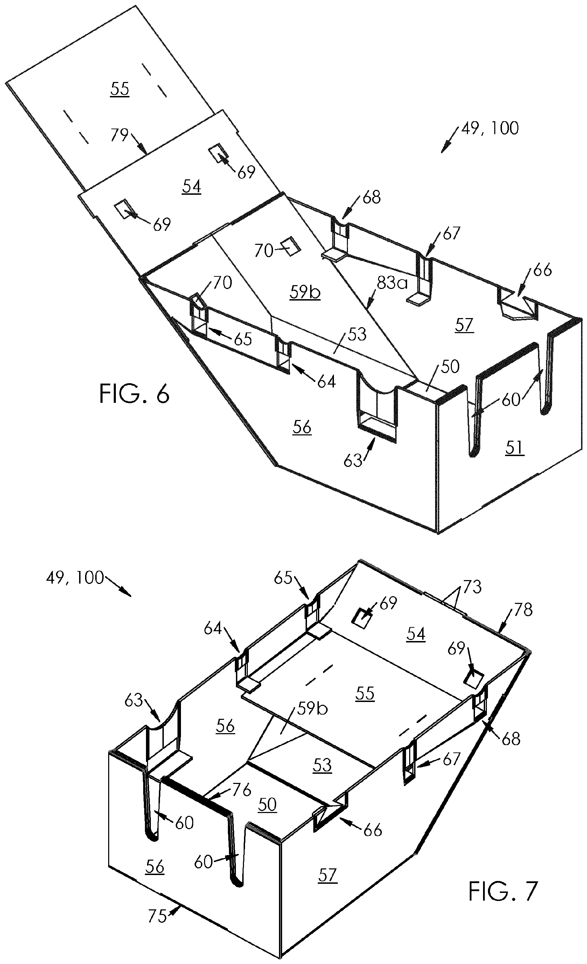

La mise en volume obtenue est représentée en figure 6. Compte tenu de la forme trapézoïdale des volets latéraux **56, 57,** la boîte de maintien **100** présente une partie avant inclinée, via une ligne **77** d'articulation, et non perpendiculaire à la paroi de fond **50.** L'angle d'inclinaison de cette partie avant de la boîte **100** est avantageusement sensiblement égal à l'angle entre la bordure avant **11** et le fond **9** de la cuve **2.**

Selon le mode de réalisation représenté sur les figures, les moyens **63, 64, 65, 66, 67, 68** sont des fentes pourvues, en leur fond, d'un ventail, et, sur leur bord latéraux, de battants pour permettre, comme il sera expliqué ci-après, le calage des brancards **4.**

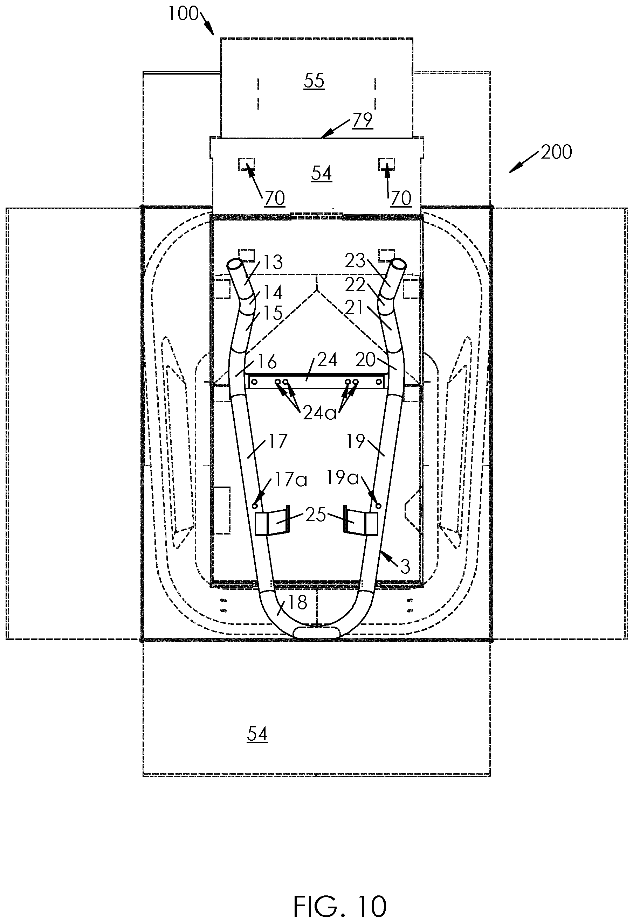

L'on décrit maintenant, partant de l'état représenté en figure 9 et en référence aux figures 10 à 14, la mise en place des différents éléments de la brouette **1** dans la boîte de maintien **100** placée dans la cuve **2.**

Après mise en place de la boîte de maintien **100** dans la cuve **3** (figure 9), le butoir **3** est placé dans la boîte **100,** de sorte que le butoir **3** passe au travers et soit en appui contre la base des lumières (**60, 61, 62a, 62b**) formées dans la triple épaisseur de flan **49.** Cette mise en place conduit à une disposition du type représenté en figure 10.

Puis, la roue **7** est placée dans la boîte de maintien **100,** au dessus et en appui sur le butoir **3.** La dimension transversale de la boîte **100** est avantageusement de l'ordre du diamètre de la roue **7,** permettant, en tirant profit de la raideur du matériau formant le flan **49**, un blocage transversal de la roue **7** dans la boîte de maintien **100.** Cette mise en place conduit à une disposition du type représenté en figure 11.

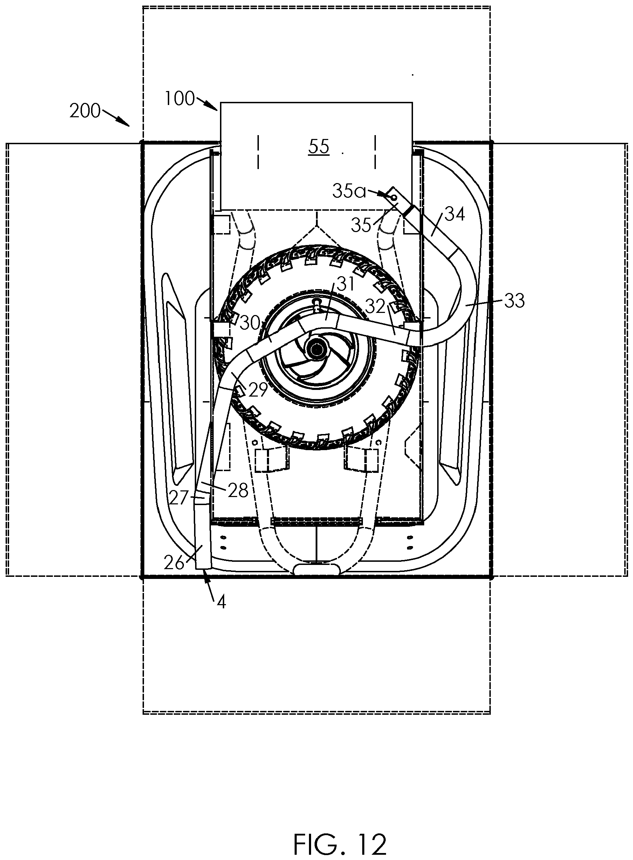

Puis, un premier brancard **4** est placé en appui dans les moyens **64, 65** de positionnement, passage et calage, ménagés dans le volet latéral droit **56**, le brancard étant également placé en appui dans les moyens **66** de positionnement, passage et calage, ménagés dans le volet latéral gauche. Cette mise en place conduit à une disposition du type représenté en figure 12.

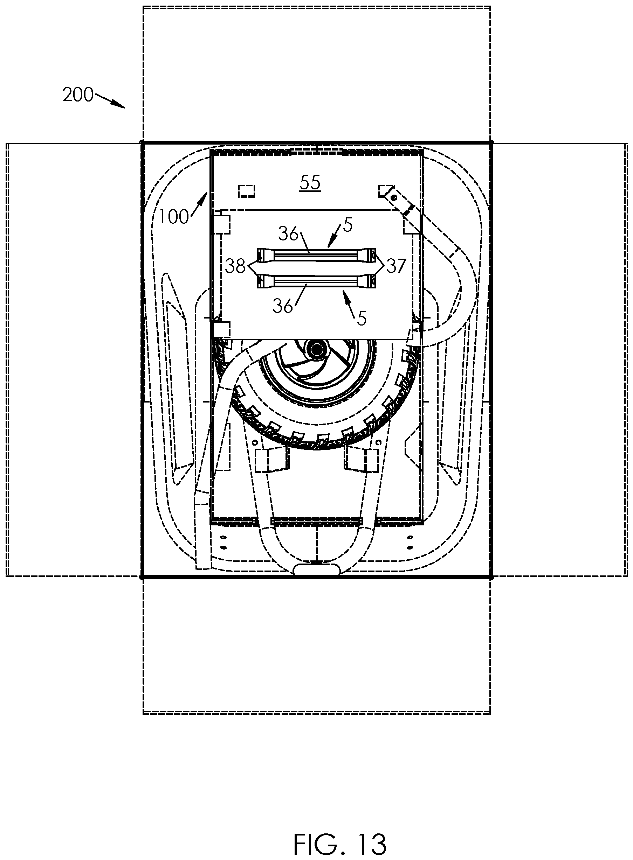

Le volet de séparation **55** est alors placé au dessus du brancard et les supports de caisse **5** sont avantageusement placés contre ce volet de séparation **55,** par exemple au moyen de découpes. Cette mise en place conduit à une disposition du type représenté en figure 13.

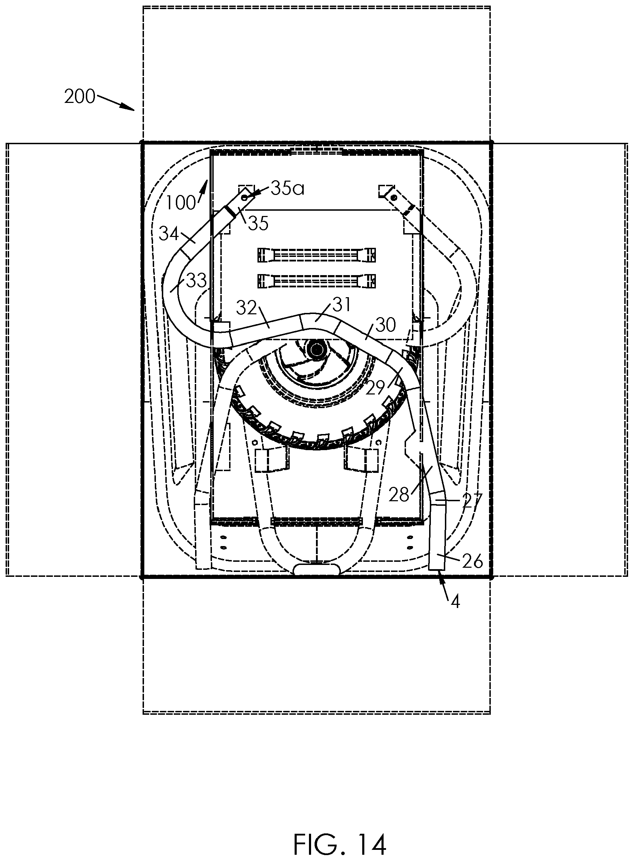

Enfin, le deuxième brancard 4 est placé en appui dans les moyens **67, 68** de positionnement, passage et calage, ménagés dans le volet latéral gauche **57,** le brancard étant également placé en appui dans les moyens **63** de positionnement, passage et calage, ménagés dans le volet latéral droit **56.** Cette mise en place conduit à une disposition du type représenté en figure 14.

Le carton de transport **200** peut alors être refermé.

Avantageusement, les tampons **6** et les vis et écrous, nécessaires pour l'assemblage de la brouette **2,** sont placés dans un sachet qui est glissé sous la roue **7** après la mise en place de celle-ci dans la boîte de maintien **100.**

L'ensemble tel qu'il vient d'être décrit présente de nombreux avantages.

Cet ensemble permet une logistique pour brouettes démontables, pour une mise à disposition d'une large gamme de brouettes, avantageusement à l'unité, à une diversité de clients finaux. Les clients peuvent avantageusement choisir eux-mêmes les caractéristiques de la brouette souhaitée, par exemple en se connectant, via un ordinateur, une tablette, ou un terminal de communication mobile, sur une plateforme de commande en ligne sur internet.

Cet ensemble assure, pour une telle logistique, une qualité de service élevée, en particulier une grande qualité perçue par les clients finaux. En particulier, les moyens de positionnement et calage assurent que les pièces de la brouette ne peuvent sensiblement pas bouger durant le transport, même en cas de gerbage et palettisation.

Cet ensemble facilite enfin, pour le premier utilisateur d'une brouette démontable, un montage intuitif, sans recours important au raisonnement ou à une expérience antérieure. En effet, l'utilisateur découvre, lors de la livraison, les pièces dans un ordre défini, qui est avantageusement présenté dans la notice de montage.

## Revendications

1. Ensemble comprenant :
- une brouette (1) en pièces détachées, incluant :
- une cuve (2) ;
- un châssis apte à recevoir la cuve (2) ;
- une roue (7) apte à être montée en rotation sur le châssis ; **caractérisé en ce que** l'ensemble comprend
- deux brancards (4) aptes à venir se fixer sur le châssis pour former des moyens de préhension et de manoeuvre de la brouette (1), et
- un carton de transport (200) apte à accueillir la cuve (2) de la brouette (1), et
- une boîte de maintien (100) de forme sensiblement complémentaire à la cuve (2), cette boîte (100) de maintien venant se loger dans la cuve (2) et étant apte à accueillir le châssis, les brancards (4) et la roue (7) de la brouette (1).

2. Ensemble selon la revendication 1, **caractérisé en ce que** la boîte de maintien (100) comprend un fond, une première paroi, une deuxième paroi, une troisième paroi et une quatrième paroi, ces quatre parois formant une ceinture encerclant le fond.

3. Ensemble selon la revendication précédente, **caractérisé en ce que** la première paroi comprend une surface pleine, apte à recevoir, en appui, une première extrémité du châssis de la brouette.

4. Ensemble selon la revendication 3, **caractérisé en ce que** la deuxième paroi, opposée à la première, comprend des ouvertures aptes à recevoir, au moins partiellement, une deuxième extrémité du châssis de la brouette, opposée à la première extrémité.

5. Ensemble selon l'une quelconque des revendications 2 à 4, **caractérisé en ce que** la première paroi comprend des lumières aptes à recevoir, au moins partiellement, une première extrémité de chacun des brancards de la brouette.

6. Ensemble selon l'une quelconque des revendications 2 à 5, **caractérisé en ce que** la troisième paroi et la quatrième paroi sont pourvues chacune de trois fentes pratiquées sur un bord supérieur écarté du fond de la boîte de maintien (100), ces fentes étant aptes à recevoir les deux brancards (4).

7. Ensemble selon la revendication précédente, **caractérisé en ce que** les fentes sont pourvues d'un vantail pliable vers l'intérieur du carton pour servir de support pour les brancards.

8. Ensemble selon la revendication 6 ou la revendication 7, **caractérisé en ce que** chaque fente est pourvue de battants s'étendant sur une hauteur inférieur à la hauteur de la fente de sorte à définir un logement dans lequel est reçu le brancard, les battants permettant, en outre, de maintenir le brancard dans la fente.

9. Ensemble selon l'une des revendications 6 à 8, **caractérisé en ce que** chaque fente présente une hauteur propre, indépendante de la hauteur des autres fentes.

10. Procédé d'assemblage de l'ensemble selon l'une des revendications précédentes, ce procédé comprenant les étapes consistant à :
- mettre en volume le carton de transport ;
- mettre en volume la boîte de maintien (100) ;
- placer la cuve (2) de la brouette (1) dans le carton de transport (200) ;
- placer la boîte de maintien (100) dans la cuve (2) ;
- placer le châssis de la brouette dans la boîte de maintien (100);
- placer la roue (7) sur le châssis de la brouette ;
- placer un premier brancard au dessus la roue (7), et
- placer le deuxième brancard sur le premier brancard.

## Patentansprüche

1. Anordnung, umfassend:
- eine Schubkarre (1) in Einzelteilen, umfassend:
- eine Wanne (2);
- ein Gestell, das geeignet ist, die Wanne (2) aufzunehmen;
- ein Rad (7), das geeignet ist, drehbar auf dem Gestell montiert zu werden;
**dadurch gekennzeichnet, dass** die Anordnung umfasst:
- zwei Längsträger (4), die geeignet sind, auf dem Gestell befestigt zu werden, um Mittel zum Ergreifen und Betätigen der Schubkarre (1) zu bilden, und
- einen Transportkarton (200), der geeignet ist, die Wanne (2) der Schubkarre (1) aufzunehmen, und
- eine Halteschachtel (100) mit einer im Wesentlichen zur Wanne (2) komplementären Form, wobei diese Halteschachtel (100) in der Wanne (2) angeordnet und geeignet ist, das Gestell, die Längsträger (4) und das Rad (7) der Schubkarre (1) aufzunehmen.

2. Anordnung nach Anspruch 1, **dadurch gekennzeichnet, dass** die Halteschachtel (100) einen Boden, eine erste Wand, eine zweite Wand, eine dritte Wand und eine vierte Wand umfasst, wobei diese vier Wände einen Gürtel bilden, der den Boden umschließt.

3. Anordnung nach dem vorhergehenden Anspruch, **dadurch gekennzeichnet, dass** die erste Wand eine volle Fläche umfasst, die geeignet ist, ein erstes Ende des Gestells der Schubkarre abgestützt aufzunehmen.

4. Anordnung nach Anspruch 3, **dadurch gekennzeichnet, dass** die zweite Wand, die der ersten gegenüberliegt, Öffnungen umfasst, die geeignet sind, zumindest teilweise ein zweites Ende des Gestells der Schubkarre, das dem ersten Ende gegenüberliegt, aufzunehmen.

5. Anordnung nach einem der Ansprüche 2 bis 4, **dadurch gekennzeichnet, dass** die erste Wand Öffnungen umfasst, die geeignet sind, zumindest teilweise ein erstes Ende jedes der Längsträger der Schubkarre aufzunehmen.

6. Anordnung nach einem der Ansprüche 2 bis 5, **dadurch gekennzeichnet, dass** die dritte Wand und die vierte Wand jeweils mit drei Schlitzen versehen sind, die am oberen Rand, der zum Boden der Halteschachtel (100) beabstandet ist, vorgesehen sind, wobei diese Schlitze geeignet sind, die zwei Längsträger (4) aufzunehmen.

7. Anordnung nach dem vorhergehenden Anspruch, **dadurch gekennzeichnet, dass** die Schlitze mit einem zum Inneren des Kartons faltbaren Flügel versehen sind, um als Stütze für die Längsträger zu dienen.

8. Anordnung nach Anspruch 6 oder Anspruch 7, **dadurch gekennzeichnet, dass** jeder Schlitz mit Klappen versehen ist, die sich auf einer geringeren Höhe als die Höhe des Schlitzes erstrecken, um eine Aufnahme zu definieren, in der der Längsträger aufgenommen wird, wobei es die Klappen ferner ermöglichen, den Längsträger in dem Schlitz zu halten.

9. Anordnung nach einem der Ansprüche 6 bis 8, **dadurch gekennzeichnet, dass** jeder Schlitz eine eigene Höhe unabhängig von der Höhe der anderen Schlitze aufweist.

10. Verfahren zum Zusammenbau der Anordnung nach einem der vorhergehenden Ansprüche, wobei dieses Verfahren die folgenden Schritte umfasst, darin bestehend:
- den Transportkarton auszustellen;
- die Halteschachtel (100) aufzustellen;
- die Wanne (2) der Schubkarre (1) in dem Transportkarton (200) anzuordnen;
- die Halteschachtel (100) in der Wanne (2) anzuordnen;
- das Gestell der Schubkarre in der Halteschachtel (100) anzuordnen;
- das Rad (7) auf dem Gestell der Schubkarre anzuordnen;
- einen ersten Längsträger über dem Rad (7) anzuordnen, und
- den zweiten Längsträger auf dem ersten Längsträger anzuordnen.

## Claims

1. Assembly comprising:
- a wheelbarrow (1) in separate parts, including:
- a basin (2);
- a frame suitable for receiving the basin (2);
- a wheel (7) that is able to be mounted in rotation on the frame; **characterized in that** the assembly comprises
- two shafts (4) that are able to be attached to the frame so as to form means for gripping and for manoeuvring the wheelbarrow (1), and
- a transport box (200) that is able to receive the basin (2) of the wheelbarrow (1), and
- a holding box (100), the shape of which essentially matches that of the basin (2), this holding box (100) being housed in the basin (2) and being able to accommodate the frame, the shafts (4) and the wheel (7) of the wheelbarrow (1).

2. Assembly according to Claim 1, **characterized in that** the holding box (100) comprises a bottom, a first wall, a second wall, a third wall and a fourth wall, these four walls forming a belt that surrounds the bottom.

3. Assembly according to the preceding claim, **characterized in that** the first wall comprises a solid surface, against which a first end of the frame of the wheelbarrow can bear.

4. Assembly according to Claim 3, **characterized in that** the second wall, opposite the first, comprises openings that are able to receive, at least in part, a second end of the frame of the wheelbarrow, opposite the first end.

5. Assembly according to any one of Claims 2 to 4, **characterized in that** the first wall comprises cutouts that are able to receive, at least in part, a first end of each of the shafts of the wheelbarrow.

6. Assembly according to any one of Claims 2 to 5, **characterized in that** the third wall and the fourth wall are each provided with three slots created on an upper edge remote from the bottom of the holding box (100), these slots being able to receive the two shafts (4).

7. Assembly according to the preceding claim, **characterized in that** the slots are provided with a tab that can bend towards the interior of the box so as to serve as a support for the shafts.

8. Assembly according to Claim 6 or Claim 7, **characterized in that** each slot is provided with flaps that extend over a height that is less than the height of the slot, so as to define a space in which the shaft is received, the flaps further allowing the shaft to be held in the slot.

9. Assembly according to one of Claims 6 to 8, **characterized in that** each slot has its own height that is independent of the height of the other slots.

10. Method for assembling the assembly according to one of the preceding claims, this method comprising the steps of:
- constructing the transport box;
- constructing the holding box (100);
- placing the basin (2) of the wheelbarrow (1) in the transport box (200);
- placing the holding box (100) in the basin (2);
- placing the frame of the wheelbarrow in the holding box (100);
- placing the wheel (7) on the frame of the wheelbarrow;
- placing a first shaft on top of the wheel (7); and
- placing the second shaft on the first shaft.
